Europäisches Patentamt

**European Patent Office**

**Office européen des brevets**

(11) Publication number: **0 003 685**
A2

(12) # EUROPEAN PATENT APPLICATION

(21) Application number: **79300205.6**

(22) Date of filing: **09.02.79**

(51) Int. Cl.²: **G 01 G 19/18**, G 01 L 5/10, G 01 L 1/14, B 66 C 23/90, G 08 B 7/06

(30) Priority: **13.02.78 IL 54032**
**28.01.79 IL 56518**

(43) Date of publication of application: **22.08.79**
**Bulletin 79/17**

(84) Designated Contracting States: **BE CH DE FR GB IT NL SE**

(71) Applicant: **Eilon, Eitan, 43 Margalit Street, Haifa (IL)**
(84) Designated Contracting States: **BE CH DE FR GB IT NL SE**

(71) Applicant: **Oshrat, Josef, 5a Odeh Street, Haifa (IL)**
(84) Designated Contracting States: **BE CH DE FR GB IT NL SE**

(72) Inventor: **Eilon, Eitan, 43 Margalit Street, Haifa (IL)**
Inventor: **Oshrat, Josef, 5a Odeh Street, Haifa (IL)**

(74) Representative: **Godwin, Edgar James, MARKS & CLERK 57-60 Lincoln's Inn Fields, London, W.C.2A 3LS (GB)**

(54) **Load indicating device.**

(57) A load-indicating device, e.g. an overload detector adapted to be placed between a load and a hoisting cable of a crane, consists of an annular member (I) of a high tensile steel, which is stressed by the load along a given axis – within its elastic limit – and is provided with an electric displacement transducer (III) placed between the portions of the annular member (I) with its displacement axis at right angles to the load vector (F, F'). The member (I) is elongated in proportion to the load acting on it, whereby the distance between the portions associated with the transducer (III) decreases, thus changing the output from the transducer (III) which obtains an input from a voltage source. This output is fed into an electric circuit (IV) adapted to indicate the actual weight of the load and/or to produce a warning signal and/or to stop the machinery at a dangerous overload.

The invention relates to electric load indicating devices, e.g. overload detectors, for loaded mechanical systems. These systems may, for example, comprise either hoisting devices adapted to lift loads vertically or along a sloping surface, or towing appliances consisting of a traction vehicle and a towed vehicle. In addition, the invention is in general applicable to form a link between a supporting body and a load of any kind, adapted to indicate the pulling force exerted by the load. It relates in particular (but not solely) to a device adapted to produce a signal serving to warn an attendant and/or cause the hoisting or towing operation to be stopped at a given, predetermined load or force intensity.

There exist various load-indicating devices and overload detectors for hoisting appliances. One of the known kinds works on the principle of the elongation of a spring or springs, which is, within certain limits, proportional to the load. The main drawback of these devices is their relative great length, especially of those devised for large lifting capacity, by which the actual lifting height of the hoist is diminished.

Another kind of indicating device makes use of a so-called strain gauge which works on the principle that in certain metals the electric resistance increases with their elongation. Here a straight, solid member forming a connecting link between the load and the hoisting chain or rope is shaped to have a given length of a narrow cross-section so dimensioned as to be elongated just below the elastic limit of the material by the maximum load for which it is designed; a strain gauge unit is firmly attached to this narrow portion so as to be elongated together therewith. The strain gauge is connected to the terminals of a constant voltage source and the output resulting from the change in length is fed to an indicating instrument and/or a warning signal. Since the elongation of the connecting member is not large, as the material is to be stressed within its elastic limit, the strain gauge is necessarily delicate and expensive, and the device is not very suitable for rough outdoor work.

What is, therefore, desired is a load-indicating and/or overload detecting device of robust build. The device should be of small dimensions in the direction of the load vector with the aim to present a maximum lifting height. It should be possible to protect delicate parts (if any) of the device against mechanical damage and chemical attack. It would be preferable to provide the device with means to ensure accurate indication of the pulling force exerted thereon and, alternatively, with means for producing a signal prior to the pulling force reaching a dangerous magnitude.

The present invention provides an electric load indicating device for a loaded mechanical system, comprising an annular member adapted for incorporation in a load-supporting mechanical member such as a chain or cable of a system attached to opposite points of said annular member, said annular member being designed to be stretched and deformed by the load applied thereto, within and below the elastic limit of the material of the member. It further comprises a displacement transducer composed of two independently axially movable parts, one part each being connected to substantially opposite points of the annular member on an axis substantially perpendicular to the axis of the points of attachment of said load supporting member. A signal, either audible or visible, is produced by an electrical input source connected to said transducer, and by an electrical circuit fed by the output from said transducer, said circuit being adapted to indicate the load acting on said annular member and/or to cause sounding of an alarm and/or to cause the operation of the system to be stopped, at a predetermined load acting on said annular member.

In a preferred embodiment the annular deformable member is in the shape of an oblong consisting of two semicircular or similarly shaped end portions connected by two straight parallel centre portions. The member is designed to be stressed to not more than the elastic limit of the material by the maximum load to be applied to it. The load is attached to the two end portions, substantially in their centre, at the extreme ends of the oblong member; the load deforms the annular member in that the semicircular portions are bent to form ellipses or like forms, so that their ends together with the centre portions approach each other. A displacement transducer is positioned between the parallel portions, one part of the transducer being attached to one of the parallel portions and the other part to the other portion. The contracting parallel portions change the relative positions of the two transducer parts whereby a variable signal is produced by the transducer in a known manner, either proportional or otherwise corresponding to the distance between the parallel portions. The transducer and its connections are preferably completely enclosed in a casing from which wiring leads to the said electric circuit, which latter is preferably distanced from the deformable annular member.

Where the hooking or clutching means of a hoisting appliance is suspended from a rope, cable, or wire rope having a "dead" end connected to a beam, arm, or jib and a "live" end connected to the hoisting equipment, the above annular member can be connected either to the "dead" or to the "live" end. In other types of hoisting appliances which do not comprise a "dead" end the annular member can be connected to the "live" end.

The outstanding feature of the annular member is the relatively large rate of contraction of the portions which are substantially parallel to the load vector, in relation to the change in the magnitude of the load. This results in a large relative displacement of the transducer parts with distinct changes in the electrical output whereby accurate indication of the load can be readily obtained.

Various kinds of transducers may be used in this device, a preferred kind being a linear variable differential transformer (LVDT), comprising a coil and an axially movable core respectively rigid with opposite points of the annular member. It is also proposed to use a longitudinally variable resistor of known design or even a strain gauge. In contradistinction to the aforedescribed strain gauge indicating device the present device, owing to the large deformation of the annular member, permits the application of a less sensitive and delicate strain gauge which, evidently, is less expensive and may withstand rough handling.

Still another kind of transducer is in the form of a proximity detector which reacts to the change in a magnetic field. In the present case a magnetic detector may be fastened to one of the central portions while
the portion on the opposite side acts as a ferromagnetic
steel core, its approximation to the magnet causing a
change in the field intensity and thus resulting in an
output change.

In its simplest form the transducer consists of a
micro-switch attached to one of the straight portions of
the annular member and an actuating member mounted on the
opposite straight portion. Upon approach of the two
straight portions the switch is actuated and respectively
closes or opens a circuit adapted to produce a suitable
signal.

It is also advisable to attach two or more
switches, one next to the other, which are adapted to be
actuated by oppositely mounted actuating members of
different reach, whereby signals can be produced in
various successive magnitudes of load. It is possible,
for instance, to let the first-actuated switch produce a
a warning signal, while the following switch - after the
load has further increased - could cause the stopping of
the hoisting operation.

In the accompanying drawings which illustrate,
by way of example, two embodiments of the load indicator:

Figure 1 is a vertical section through a circular
annular member combined with a transducer of the kind known
as a linear variable differential transformer (LVDT);

Figure 2 is an elevation of an oblong annular
member showing the enclosure of the electrical equipment;

Figure 3 shows a crane embodying a load
indicator; and

Figure 4 is an elevation of an oblong annular
member combined with a transducer in the form of a micro-
switch and an actuator member.

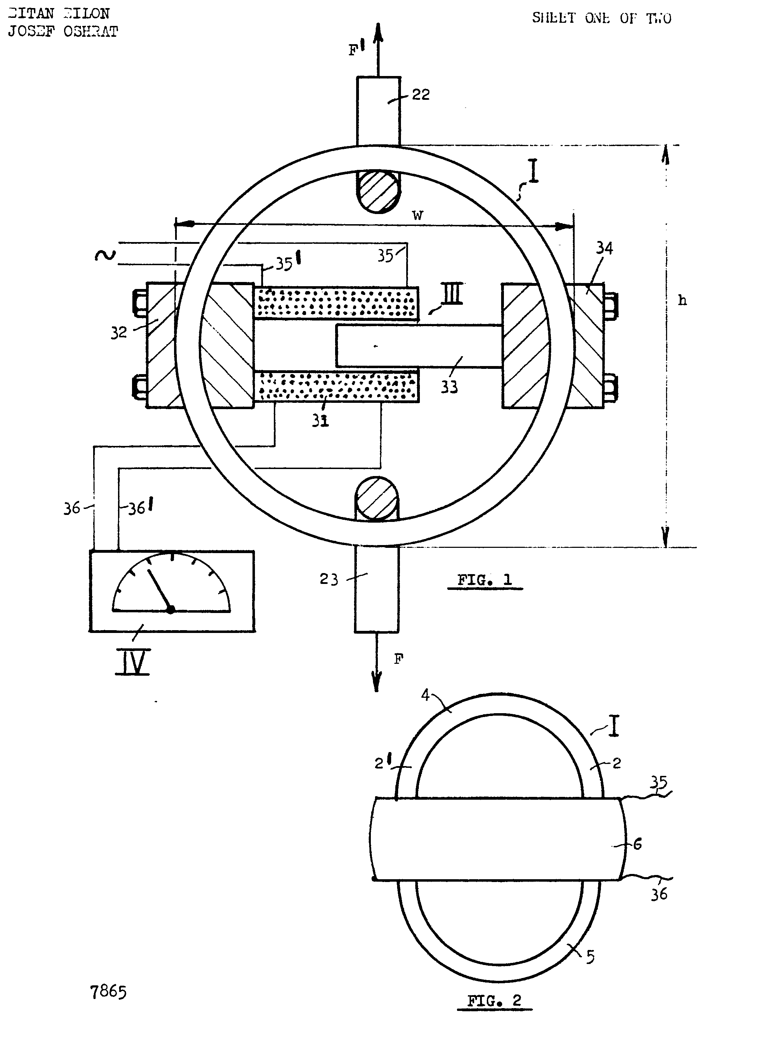

With reference to Figure 1 of the drawings, a
circular annular member I of high tensile steel is suspended between an upper steel cable link 22 and a lower link 23, defining the direction of a load vector F,F' acting on the member. A displacement transducer III of the LVDT-type is attached with its axis at right angles to the load vector, and comprises two independently movable parts 31, 33, each rigidly fastened to opposite points of the member I. The part 31 consists of a cylindrical wire coil and fastening means 32 adapted for clamping the coil to the ring-shaped member I; the part 33 consists of an iron core similarly fastened to the opposite side of the member I by clamping means 34. The core and the coil are fastened in co-axial alignment and the core is free to move in the coil in axial direction, within the limits of the deformation of the annular member in a direction transverse to the load vector. The coil is connected by wires 35, 35' to an alternating voltage source, which forms the input, and is connected to an electric control box IV by two output wires 36,36'. It can be visualized from the drawing that the distance $\underline{h}$ between the points of load application equals the distance $\underline{w}$ perpendicular to the load vector F,F', as long as the load F equals zero. As soon as a certain load is lifted or pulled by the cable link 22, the ring member I is elongated in the direction F,F', causing the width $\underline{w}$ to decrease. This movement pushes the core 33 deeper into the coil 31, thus changing the output fed to the control box circuit. The control box of the drawing is designed to indicate the load value F on a scale 41 by means of a dial 42. It is evident that the load indicator is to be calibrated before mounting on a hoisting or traction appliance, and that testing and re-calibrating has to be carried out at prescribed intervals to ensure exact working of the apparatus.

In addition to the load indicating scale the control box is preferably arranged to give a warning signal at a predetermined maximum load and/or to interrupt the load raising operation in order to prevent damage to the equipment and danger to the surroundings.

The LVLT-transducer shown in the drawing may, evidently, be replaced by any other kind of transducer, which is adapted to giving an output directly related to the change in the width $w$, such as longitudinally variable resistors, a strain gauge, or the like.

As mentioned before, the annular member may be designed in various forms such as, for instance, in the shape of an ellipse or of an oblong consisting of two semicircular end portions 4 and 5 and two straight parallel centre portions 2 and 2'as illustrated in Figure 2. This Figure also shows a cover 6 adapted to enclose and protect the transducer device, attached to the two centre portions respectively. Likewise, the ring member need not be of uniform cross-section throughout; to the contrary, this may be varied in accordance with stress calculations with a view to cause a large change of transverse width with relatively small material stresses.

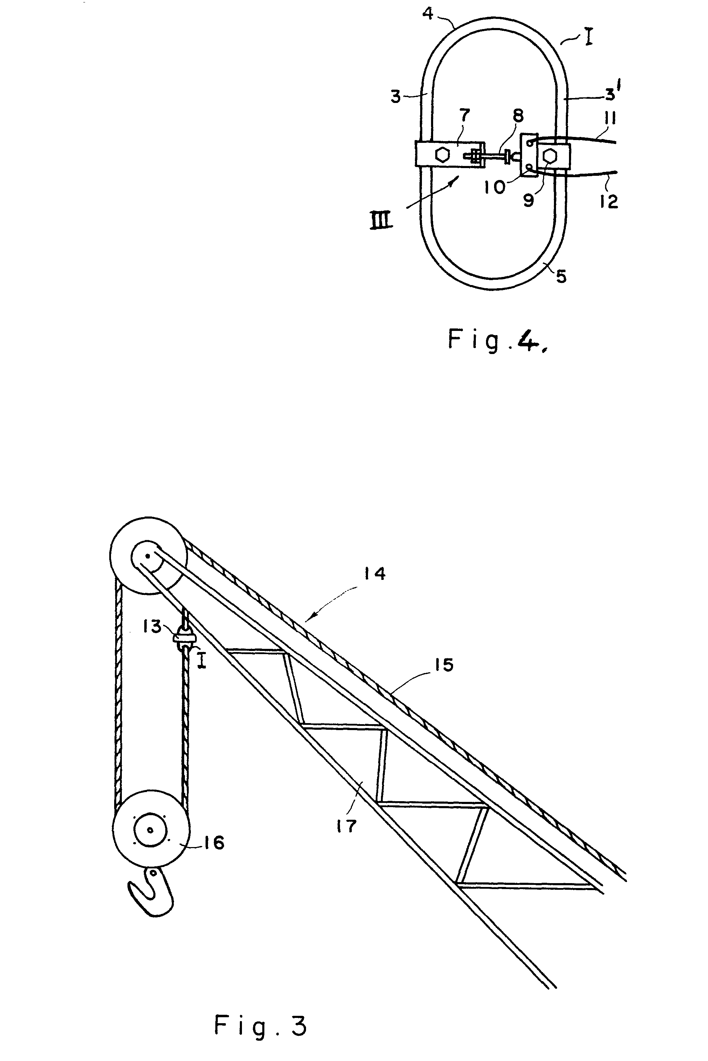

The load detector illustrated in Figure 4 comprises an oblong annular member I having two straight central portions 3,3' and two semicircular terminal portions 4 and 5.

Mounted on the central portions 3,3' of the annular member I is a box (not shown) which houses the mechanism. The latter comprises a first bracket 7 mounted on the straight central portion 3 and supporting an adjustable actuating member 8. On the opposite straight central portion 3' is mounted a second bracket 9 supporting a microswitch 10 electrically connected to a signalling or alarm device by wires 11 and 12.

As shown in Figure 3 a load indicator or an overload detector according to the invention, of the kind illustrated in Figures 1, 2, and 4, is incorporated in a crane 14 by being mounted at the "dead" end of a cable or chain 15 between the hooking means 16 and an arm 17, close to the arm.

During operation, when a load is suspended from the hooking means 16, the load detector 13 is subjected to a force. In consequence of such force, the two straight central portions 3,3' of the annular member I cave in, causing the actuating member 8 and the switch 10 to move close to each other. When the load hoisted by crane 14 increases and reaches a predetermined value, actuating member 8 comes to bear on the switch 10 whereupon a signal or alarm is triggered off. The point at which the contact between the actuating member 8 and the switch 10 is brought about can be selected by judicious adjustment of the actuating member 8.

It is easily understood that two or more switches 10 may be provided, each adjusted to respond to a different load. Likewise, each switch member 10 may be connected to two or more electrical signalling devices each of which responds to a different load. By either of these devices the detector is adapted to respond successively to two or more different loads.

It will also readily be understood that the actuating member 8 may be disposed of and the or each switch 10 may be so mounted that, in operation, upon deformation of the annular member I it comes to bear on the opposite portion thereof. In such an embodiment the or each switch may be adjusted so that the load at which a signal is triggered off is selected.

CLAIMS:-

1. An electric load indicating device for a loaded
   mechanical system, comprising

   an annular member (I) adapted for incorporation
   in a load-supporting mechanical member so that a
   load is applied to opposite points of the annular
   member (I), the annular member (I) being designed
   to be stretched by the load applied thereto, within
   and below the elastic limit of the material of the
   annular member (I),

   a displacement transducer (III) composed of
   two independently axially movable parts (31, 33;
   8, 10) respectively rigid with  substantially
   opposite points of the annular member (I) on a
   displacement axis transverse to the axis of the
   points of application of the load,

   an electrical input source connected to the
   transducer (III), and

   an electric circuit (IV) fed by an output
   from the transducer (III), the circuit (IV) being
   adapted to indicate the load acting on the annular
   member (I) and/or to cause sounding of an alarm at
   a predetermined load acting on the annular member
   (I) and/or to cause the operation of the system to
   be stopped at a predetermined load acting on the
   annular member (I).

2. An electric load indicating device as claimed in
   claim 1, in which the annular member (I) is of
   symmetrical configuration.

3. An electric load indicating device as claimed in claim 2, in which the load is applied to two opposite points of the annular member (I) positioned on a first axis of symmetry, the transducer parts (31, 33; 8, 10) are rigid with opposite portions (2, 2'; 3, 3') of the annular member (I) which are substantially parallel to the axis of the points of application of the load, and the displacement axis coincides substantially with a second axis of symmetry at right angles to the first axis.

4. An electric load indicating device as claimed in claim 2, in which the annular member (I) is of circular shape.

5. An electric load indicating device as claimed in claim 2 or 3, in which the annular member (I) is of oblong shape consisting of two curved end portions (4, 5) connected by two straight parallel centre portions (2, 2'; 3, 3').

6. An electric load indicating device as claimed in claim 5, in which the end portions (4, 5) are semicircular.

7. An electric load indicating device as claimed in claim 2 or 3, comprising an annular member (I) of elliptic configuration.

8. An electric load indicating device as claimed in any of claims 1 to 7, in which the annular member (I) is of uniform cross-section throughout.

9. An electric load indicating device as claimed in any of claims 1 to 7, in which the annular member (I) is of variable cross-section and cross-sectional
area in different portions thereof.

10.    An electric load indicating device as claimed in
any of claims 1 to 9, in which the transducer (III)
is in the form of a linear variable differential
transformer, consisting of two freely movable parts,
one part (31) comprising a coil and the other part
(33) comprising an iron core axially movable within
the coil.

11.    An electric load indicating device as claimed in
claim 10, wherein the respective two parts (31, 33)
are fastened to diametrically opposite points of the
annular member (I) at right angles to the axis of the
points of application of the load.

12.    An electric load indicating device as claimed in
claim 5, wherein the respective two parts (31, 33; 8, 10)
are rigid with the two straight parallel centre portions
(2, 2', 3, 3') of the annular member (I).

13.    An electric load indicating device as claimed in
any of claims 1 to 9, in which the transducer (III) is
in the form of a longitudinally variable resistor.

14.    An electric load indicating device as claimed in
any of claims 1 to 9, in which the transducer (III)
is in the form of a strain gauge.

15.    An electric load indicating device as claimed in
any of claims 1 to 9, in which the transducer in the
form of a proximity detector comprising magnetic means
adapted to create a magnetic field attached to one portion of the annular member parallel to the load axis, and a ferromagnetic core in the said magnetic field adapted to change the field intensity by approximation to the magnetic means and thus to change the output of the proximity detector to said electric circuit, the core being integral with and constituted by the portion of the annular member opposite the said one portion and parallel to the load axis.

16.    An electric load indicating device as claimed in any of claims 1 to 9, in which the transducer (III) comprises at least one switch (10) rigid with one portion (3') of the annular member (I) and a switch-actuating member (8) rigid with the opposite portion (3) of annular member (I).

17.    An electric load indicating device as claimed in claim 16, in which the initial distance - at no load- between the switch (10) and the switch actuating member (8) is adjustable.

18.    An electric load indicating device as claimed in claim 16 or 17, in which at least two switches are rigid with one portion of the annular member, and at least two switch-actuating members are rigid with the opposite portion of the annular member, and the switches are connected to two circuits adapted to sound an alarm and to stop the load-moving operation, respectively.

EITAN EILON
JOSEF OSHRAT

F¹ ↑

22

I

w

~

35¹ 35 34

III

32

31 33

36 36¹

IV

23

F↓

FIG. 1

4

I

2¹ 2

35

6

36

5

FIG. 2

7865

Fig.4,

Fig.3